# EUROPEAN PATENT SPECIFICATION

(11) **EP 2 310 330 B1**
(45) Date of publication and mention of the grant of the patent: **06.11.2013**
(21) Application number: 09775817.1
(22) Date of filing: 17.07.2009
(51) Int. Cl.: C02F 9/00

(54) **METHOD OF CHEMICAL-MECHANICAL TREATMENT OF WASTE WATERS FROM OPERATION OF TANNERIES**
VERFAHREN ZUR CHEMISCH-MECHANISCHEN BEHANDLUNG VON ABWÄSSERN AUS DEM BETRIEB VON GERBEREIEN
PROCÉDÉ DE TRAITEMENT CHIMIQUE-MÉCANIQUE D'EAUX USÉES PROVENANT DU FONCTIONNEMENT DE TANNERIES

(30) Priority: 25.07.2008 MN 418008
(43) Date of publication of application: 20.04.2011
(73) Proprietor: Eurosound Spol. S.r.o., 147 00 Praha 4 (CZ)
(72) Inventor: BRODSKY, Artur, 160 00 Praha 6 (CZ); NOVOTNY , Jan, 168 00 Praha 6 (CZ); MAZUR , Vitezslav, 370 11 Ceske Budejovice (CZ); ALTANGEREL , Sosorbaramy, Darkhan (MN); ENGHBOLD, Yundendorjiin, Ulaanbaatar (MN)
(74) Representative: Krmencik, Vaclav
(86) International application number: PCT/CZ2009/000093
(87) International publication number: WO 2010/009684

(56) References cited:
- DE-A1- 19 517 231
- P. MIJAYLOVA NACHEVA, G. MOELLER CHAVEZ, M. JUAREZ HERRERA: "Alternative treatment strategy for tannery wastewater reuse and material recovery" WATER SCIENCE AND TECHNOLOGY, vol. 50, no. 2, 2004, pages 121-130, XP002555494

## Description

### Technical Field

The invention relates to a method of chemical-mechanical treatment of waste waters from processing of raw hides of farm animals, such as sheep, beef cattle, goats, horses, and others.

### Background Art

Hides processed in tanneries are an intermediate product intended for further processing. In the case of intermediate products for fur products, there is used a technology of chrome tanning, where raw hides are treated in a bath containing chromium(III) salts. In order to obtain pelts, i.e. hides without hair, raw hides are treated in an alkaline bath, containing alkalis, and, in particular, sodium sulphide, by which subcutaneous tissues and hair are removed from the raw hides. The both technologies produce waste waters containing harmful, and, in the concentrations in question, toxic substances. For this reason, these waters must not be discharged into public watercourses, and not even into a public sewerage system leading the waste waters into a community waste water treatment plant for final treatment. Because of that, the waste waters must be brought in line at least with the local sewerage system regulations.

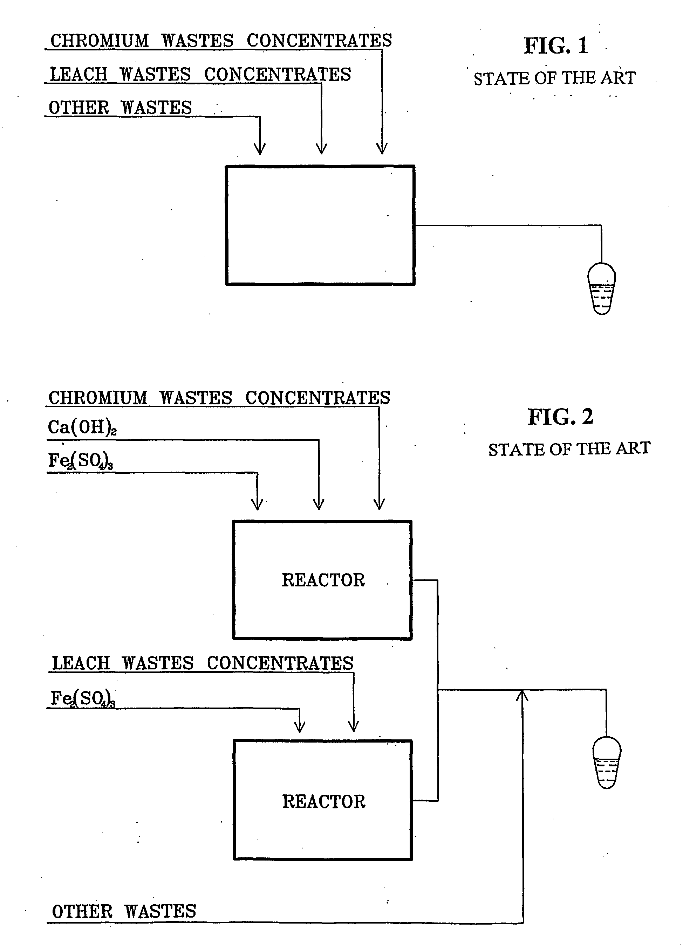

According to the state of the art, waste waters from tanneries producing the above-mentioned kinds of waste waters are treated, on the one hand, together in a mixture, namely in the mixture of concentrates of waters from chrome tanning, and of leach waters, together also with washing waters from the above-mentioned tanning processes (see FIG. 1), qualitative composition of which is similar to the concentrates but concentration of which is many-times lower than in the original concentrates. During that, pollution is reduced simply by diluting, but this reduction is insufficient from the point of view of the requirements. Joint treatment of this mixture of waters is uneconomical and shows low efficiency. Because of that, some of the tanneries are using the method of treatment of waste waters from tanneries separately according to their kind (see FIG. 2).

The document P. Mijaylova Nacheva, G. Moeller Chavez, M. Juarez Herrera: "Alternative treatment strategy for tannery wastewater reuse and material recovery" WATER SCIENCE AND TECHNOLOGY, vol. 50, no. 2, 2004, pages 121-130 discloses reusing the tannery waste waters in to the process and recovery of materials /chromium/.

### Disclosure of Invention

Through this method, higher treatment effect is achieved, but at the expense of much higher costs for operational chemicals and investments.

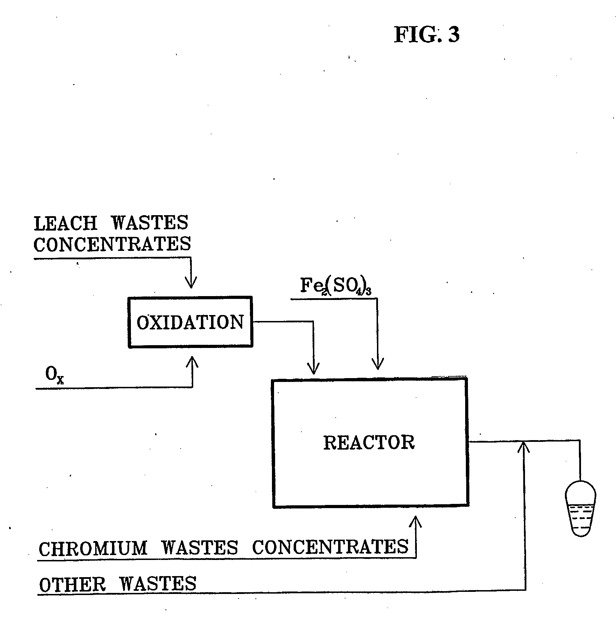

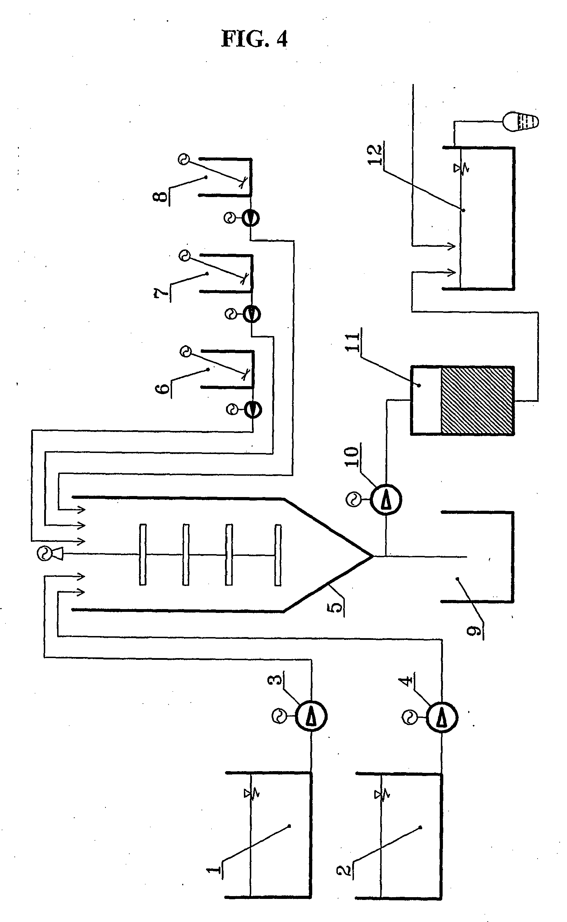

In accordance with the method of chemical-mechanical treatment of waste waters from operation of tanneries and in accordance with the apparatus for carrying out of the method_(see FIG. 3 and FIG. 4), according to our invention, waste exhausted process baths are treated in the concentrated states, namely in the way that, at first, sulphides (S²⁻, SH⁻) are removed separately from the leach water, preferably through oxidation by air oxygen or through chemical oxidation using and oxidation agent, and this water is mixed with the exhausted concentrated bath polluted with Cr³⁺ salts, and together with that, it is subjected to chemical coagulation. The remaining (wash out) waters are then added to the treated mixture in the end.

The method of treatment according to the invention provides the following advantages:
1. Improvement of the efficiency of the treatment process;
2. Improvement of final level of treatment of waste waters from tanneries ;
2. Reduction of consumption of operational chemicals;
3. Reduction of investment by lowering of requirements on operational equipment,;
4. Reduction of energy consumption, and staff of the treatment plant;
5. Reduction of requirements on the built-up area;
6. Reduction of production of waste sludge;
7. A consequence is also lowering of the need for maintenance and spare parts.

The invention will find use in tanneries using the both basic processes: treatment by chromium(III) salts in weakly acid pH for production of intermediary products for fur products, and production of hairless leathers through action of alkaline sulphides in strongly alkaline baths.

### Detailed Description of the Invention

A method of chemical-mechanical treatment of waste waters from operation of tanneries, through which there are treated waste exhausted process baths in concentrated state, process known as such, characterized in that, at first, the concentrated waste bath from chrome tanning is mixed with the concentrated bath, from which sulphides were removed, in the volume ratio from 3 : 1 to 2 : 3, and, under permanent mixing, there are added a coagulating agent based on iron, and calcium hydroxide in order to keep the resulting pH of the mixture in the range from 9.5 to 10.5, and, subsequently, there is added an auxiliary flocculating agent on the basis of a polymeric organic substance, for example, polyacrylamide, and the resulting sludge is removed from the liquid phase by sedimentation.

When the method of the invention is carried out (FIG. 3 and FIG. 4), it is proceeded in the way that a volume of concentrated waste bath from the production of pelts, from which sulphides were removed, for example, via catalytic oxidation using air oxygen, is pumped into a reaction tank equipped with a mixing device, to which a volume of concentrated tanning bath comprising chromium(III) salts is added under permanent mixing, and, simultaneously, there is added a solution of ferrisulphate in an amount according to the level of organic pollution, and, further, calcium hydroxide in order to keep the reaction pH of the mixture in the range from 9.5 to 10.5, and, subsequently, there is added an auxiliary flocculating agent, for example, a high-molecular polyacrylamide, and, after concluding the mixing, the mixture is allowed to sediment. After 30 to 60 minutes of sedimentation, the settled sludge is discharged from the bottom of the tank, and the supernatant is pumped for further treatment, or optionally, mixed with the other waters from the tannery.

The main advantage of the method of the invention is its high efficiency of treatment, with simultaneous saving of reaction chemicals, and with lower requirements on the number and size of the treatment equipment.

### Brief Description of the Drawings

The invention will be disclosed in accordance with the following Drawings in which:
FIG. 1 shows the method according to state of the art;
FIG. 2 shows another method according to the state of the art;
FIG. 3 shows the method according to the invention in comparison with the state of the art as drawn in FIG. 1 and in FIG. 2;
FIG. 4 shows the complete method according to the invention as well as an apparatus for carrying out the invention.

As it is depicted in FIG. 4 the apparatus comprises:
- at least one first accumulation tank (1) for waste waters containing concentrated organic waste waters free of sulfides connected with at least one reaction tank (5);
- at least one second accumulation tank (2) for waste waters containing concentrated mainly trivalent chromium waste waters connected with the reaction tank (5);
- a supply tank (6) containing a stirrer for coagulant and the supply tank (6) is connected with the reaction tank (5);
- a storage tank (7) including a stirrer for agent using for pH regulation and the storage tank (7) is connected with the reaction tank (5);
- a supply container (8) including a stirrer for flocculation agent and the supply container (8) is connected with the reaction tank (5);
where the reaction tank (5) is equipped with a stirrer for thorough mixing the waste waters from accumulation tanks (1, 2) together with agents from the supply tank (6), storage tank (7) and supply container (8), and below of the reaction tank (5) is positioned a sedimentation tank (9) for receiving mixture of settled sludge (8) with a residual supernatant from the reaction tank (5), and the supernatant is separated from settled sludge (8) in the sedimentation tank (9) connected to the pump (10) for pumping the separated supernatant through a sand filter (11) into a container (12).

### Best Mode for Carrying Out of the Invention

An embodiment of the method of the invention is illustrated by the following specific example:

### EXAMPLE 1

In accordance with FIG. 4, a tannery processing raw hides of various farm animals, on the one hand, into fur products, and, on the other hand, into pelts to be further processed in the leather industry, there are produced, at the same time, two kinds of exhausted tanning baths: on the one hand, waters from chrome tanning, the pollution of which is characterised by the following values: 2500 mg/l Cr³⁺, and organic pollution expressed by the value COD = 8500 mg/l O₂, and BOD₅ = 4760 mg/l O₂ at pH = 4.6, and leach waters from pelts production, with values S²⁻ = 2100 mg/l, COD = 16500 mg/l O₂, and BOD₅ = 9200 mg/l O₂ at pH = 12.9. Both kinds of waters are lead into a waste water treatment plant separately in the concentrated state, together with the first washing waters, the composition of which is similar to the original baths. From the both waters, coarse mechanical pollutants are removed by passing through mechanical sieves with mesh size 1 mm. Subsequently, sulphides are removed from the sulphide water through catalytic oxidation by air oxygen to residual values 0 to 5 mg/l. This water showing organic pollution level essentially in the original values is accumulated in tank /1/. Water with content of trivalent chromium accumulates in tank /2/. From tanks /1/ and /2/, the both waters are pumped into reaction tank/5/, in the way that the ratio of the water with chromium to the leach water free of sulphides in the total volume of the reaction tank is 3 : 2, and, subsequently, under permanent mixing via the mechanical mixer, there is added ferrisulphate in an amount 4 mval/l in order to support the coagulating process /6/, then calcium hydroxide is added in an amount 0.5 g/l /7/, and, finally, there is added an organic polymer based on polyacrylamide in an amount 2 mg/l, in order to speed up sedimentation of the produced sludge /8/. Subsequently, mixing is stopped and the content of the reaction tank is allowed to sediment. After 45 minutes of sedimentation, the layer of settled sludge from the bottom of the tank is pumped into tank/9/, and, subsequently, the separated water is pumped, using the pump /10/, through a sand filter /11/ into tank /12/, into which the other wash out waters from the tannery are lead.

### Industrial Applicability

The invention will find use in tanneries using, at the same time, technologies of tanning of raw hides in baths comprising, as the effective component, salts of trivalent chromium, and of producing pelts in leach alkaline baths containing alkaline sulphides.

## Claims

1. A method of chemical - mechanical treatment of waste waters from operation of tanneries comprising waste bath from the production of pelts and the waste bath from the chrome tanning both in concentrate state ***characterized in that*** sulfides are removed separately from the bath from the production of pelts by removing via an oxidation process, then such leach water is mixed together with chrome tanning containing chromium salts in volume ratio 3:1 to 2:3 according to the levels of pollution of both kinds of waters and, under permanent mixing a coagulation agent is added, and the mutual coagulation of both kinds of polluting waste waters are being performed under adding ferrisulphate and calcium hydroxide to keep the reaction pH of mixture in the range from 9,5 to 10,5, an auxiliary flocculating agent is added after it, settled sludge is sequentially discharged and the supernatant is filtered and then mixed with other flushing waters from tanneries.

2. A method according to claim 1, wherein the leach water from the oxidation process is collected separately.

3. A method according to claim 1, wherein the process bath from the chrome tanning containing chromium salts is collected separately.

4. A method according to claim 1, wherein auxiliary flocculating agent is a high molecular polyacrylamide.

## Patentansprüche

1. Verfahren zur chemisch-mechanischen Behandlung von Schmutzwässern vom Betrieb von Gerbereien, die ein Schmutzbad von der Herstellung von Pelzen und das Schmutzbad von der Chromgerbung, beide im konzentrierten Zustand, umfassen, ***dadurch gekennzeichnet, dass*** Sulfide separat von dem Bad von der Herstellung von Pelzen durch Entfernen mittels eines Oxidationsprozesses entfernt werden, dann wird solches Laugenwasser zusammen mit Chromsalze enthaltende Chromgerbung im Volumenverhältnis 3:1 bis 2:3 entsprechend den Verschmutzungsgraden von beiden Arten von Wässern gemischt, und, unter permanentem Mischen wird ein Koagulationsagens zugegeben, und die gemeinsame Koagulation von beiden Arten von umweltverschmutzenden Schmutzwässern wird unter Zugabe von Eisensulfat und Kalziumhydroxid durchgeführt, um den Reaktions-pH der Mischung in dem Bereich von 9,5 bis 10,5 zu halten, ein Hilfsfällagens wird danach zugegeben, der abgesetzte Schlamm wird sequenziell entladen und der Überstand wird filtriert und dann mit anderen Spülungswassern von Gerbereien gemischt.

2. Verfahren nach Anspruch 1, wobei das Laugenwasser von dem Oxidationsprozess separat gesammelt wird.

3. Verfahren nach Anspruch 1, wobei das Prozessbad von der Chromsalze enthaltende Chromgerbung separat gesammelt wird.

4. Verfahren nach Anspruch 1, wobei das Hilfsfällagens ein hochmolekulares Polyacrylamid ist.

## Revendications

1. Procédé de traitement chimique - mécanique d'eaux usées de l'exploitation de tanneries comprenant un bain de déchets de la production de peaux et le bain de déchets du tannage au chrome tous les deux à l'état concentré ***caractérisés en ce que*** les sulfures sont enlevés séparément du bain de la production de peaux par enlèvement via un processus d'oxydation, ensuite cette eau de lixiviation est mélangée ensemble avec le chrome de tannage contenant des sels de chrome dans un rapport en volume de 3 : 1 à 2 : 3 selon les niveaux de pollution des deux types d'eau et, sous un mélange permanent un agent de coagulation est ajouté, et la coagulation mutuelle des deux types d'eaux usées polluantes est réalisée en ajoutant du ferrisulfate et de l'hydroxyde de calcium pour maintenir le pH réactionnel du mélange dans la plage de 9,5 à 10,5, un agent de floculation auxiliaire est ajouté après cela, la boue décantée est déchargée séquentiellement et le surnageant est filtré puis mélangé avec d'autres eaux de lavage des tanneries.

2. Procédé selon la revendication 1, dans lequel l'eau de lixiviation du processus d'oxydation est collectée séparément.

3. Procédé selon la revendication 1, dans lequel le bain du processus du tannage au chrome contenant des sels de chrome est collecté séparément.

4. Procédé selon la revendication 1, dans lequel l'agent de floculation auxiliaire est un polyacrylamide de haute masse moléculaire.
